# EUROPEAN PATENT APPLICATION

(11) **EP 2 755 191 A1**
(43) Date of publication of application: **16.07.2014**
(21) Application number: 12830213.0
(22) Date of filing: 10.07.2012
(51) Int. Cl.: G07F 19/00, G06K 9/00, H04N 7/18, G06Q 20/00

(54) **SELF-SERVICE TRANSACTION AND AUTOMATIC EMERGENCY HEDGE SYSTEM**

(30) Priority: 08.09.2011 CN 201110265089
(71) Applicant: GRG Banking Equipment Co., Ltd., Guangzhou, Guangdong 510663 (CN)
(72) Inventor: LUO, Panfeng, Guangzhou Guangdong 510663 (CN); XIE, Fei, Guangzhou Guangdong 510663 (CN); WANG, Qinghua, Guangzhou Guangdong 510663 (CN); TAO, Pinde, Guangzhou Guangdong 510663 (CN); HUO, Guojie, Guangzhou Guangdong 510663 (CN)
(74) Representative: Maiwald Patentanwalts GmbH
(86) International application number: PCT/CN2012/078401
(87) International publication number: WO 2013/034025

(57) **Abstract**

A self-service transaction and automatic emergency hedge system, including an emergency signal generation module (10) and a self-service terminal control module (20). The emergency signal generation module (10) is used for, during transaction, collecting and identifying current environment information within the safety area of a self-service terminal, extracting user feature information in the collected current environment information to compare with the stored user comparison information, and if they are inconsistent, then emitting an emergency interruption service signal, wherein the user comparison information is the user feature information collected and stored when a user inputs a correct password for transaction. The self-service terminal control module (20) is used for detecting and receiving the emergency interruption service signal and controlling the self-service terminal to stop a transaction according to the emergency interruption service signal. The self-service transaction and automatic emergency hedge system can automatically identify external unsafe factors during the transaction of the current user of a self-service terminal and can automatically apply emergency hedge to stop the current transaction when detecting that the operating user within the safety area of the self-service terminal changes, ensuring the fund safety of the user.

## Description

This application claims the priority of Chinese Patent Application No. 201110265089.0, entitled "AUTOMATIC EMERGENCY RISK AVOIDING SYSTEM FOR SELF-SERVICE TRANSACTION", filed with the Chinese Patent Office on September 8, 2011, which is hereby incorporated by reference in its entirety.

### FIELD OF THE INVENTION

The present invention relates to the technical field of finance, and in particular to an automatic emergency risk avoiding system for self-service transaction.

### BACKGROUND OF THE INVENTION

With the development of financial electronization in China, financial self-service transaction is gradually becoming a main way that the financial institutions serve their customers. However, with wide application of financial self-service terminals, security problems of financial self-service terminals are increasingly emerging and widely concerned by the society, and prevention of crimes relating to financial self-service transaction has become a world subject.

In order to decrease crimes relating to financial self-service terminals technically, the first issue to be considered is to decrease risk earning ratio of this criminal offence and increase criminal cost of criminals. Nowadays, various banks and providers of software and hardware products of various financial self-service devices in China provide various security solutions and various security products to enhance the security of financial self-service devices.

Nowadays, there are mainly some solutions as described hereinafter for increasing security of financial self-service devices.
(1) Reproducing the criminal scene afterwards by video monitor to facilitate the public security organs to track suspects, which is a remedy measure.
(2) Improving the security of the financial self-service devices against some specific criminal ways used by criminals such as installing some deceive devices purloining user's password and card information, which is a stopgap measure.
(3) For "emulational" financial self-service devices, an EMV solution or a mobile phone operation solution is proposed for use. These solutions, however, are all based on a fact that the existing business operation flow, the bank business platform, user habit or others is greatly changed, and thus have disadvantages of high cost and long time, especially when relating to a great change of bank internal business platforms, and thus these solutions cannot be carried out in a short time.

A problem the existing security solutions encountered is: these solutions cannot actively prevent and actively terminate crimes relating to financial self-service devices technically. Especially for some instances causing user losses such as when an operator is hijacked and an operation authority is transferred, there is no corresponding technical security safeguard measure.

### SUMMARY OF THE INVENTION

The present invention proposes an automatic emergency risk avoiding system for self-service transaction, which automatically identifies unsafe factors outside during a transaction process of a current user of a self-service terminal, and automatically performs emergency risk avoiding to terminate the current transaction when detecting an operator in a safety area of the self-service terminal changes, and thus the security of user's capital can be ensured.

It is provided according to the invention an automatic emergency risk avoiding system for a self-service transaction, including:
an emergency signal generation module configured for: during a transaction process, collecting and identifying current environment information in a safety area of a self-service terminal, extracting user feature information in the collected current environment information, comparing the extracted user feature information in the collected current environment information with stored user comparison information, and issuing an emergency termination service signal in the case that the extracted user feature information in the collected current environment information is not consistent with the stored user comparison information, wherein the user comparison information is user feature information collected and stored when a user inputs a correct password for transaction; and
a self-service terminal control module for detecting and receiving the emergency termination service signal and controlling the self-service terminal to terminate the transaction in response to the emergency termination service signal.

Implementing the automatic emergency risk avoiding system for self-service transaction has the following effects:

The automatic emergency risk avoiding system for self-service transaction according to the present invention automatically identifies unsafe factors outside during a transaction process of a current user of a self-service terminal, and automatically performs emergency risk avoiding to terminate the current transaction when detecting an operator in a safety area of the self-service terminal is changed, and thus the security of user's capital can be ensured. For example, during a transaction process, using the emergency signal generation module to collect and identify current environment information in the safety area of the self-service terminal, extract user feature information in the collected current environment information, compare the extracted user feature information in the collected current environment information with stored user comparison information, and issue an emergency termination service signal if the extracted user feature information in the collected current environment information is not consistent with the stored user comparison information; wherein the user comparison information is user feature information collected and stored when the user inputs a correct password for transaction; and using the self-service terminal control module to detect and receive the emergency termination service signal, and control the self-service terminal to terminate the transaction according to the emergency termination service signal. Therefore, during a business transaction process of a financial self-service terminal (especially during money drawing and account transferring transactions), process flow facilitating the security of the cardholder's account fund is automatically taken without manual intervention according to the change of outside environment such as when an operator of the financial self-service device in the safety area is hijacked and thus the operation authority is transferred, or unsafe factors such as others appear in the safety area, therefore, the security of the account fund during the user business operation process is improved technically, and the crime success rate and crime earning ratio of criminals are decreased.

### BRIEF DESCRIPTION OF THE DRAWINGS

Figure 1 is a schematic structural diagram of an automatic emergency risk avoiding system for self-service transaction according to the present invention;
Figure 2 is a schematic flow chart for performing money withdrawal business if the automatic emergency risk avoiding system for self-service transaction according to the present invention is applied to a self-service terminal control system in the prior art;
Figure 3 is a schematic flow chart for performing transfer business if the automatic emergency risk avoiding system for self-service transaction according to the present invention is applied to a self-service terminal control system in the prior art.

### DETAILED DESCRIPTION OF THE INVENTION

Technical solutions of embodiments of the present invention is described clearly and in detail in conjunction with drawings of embodiments of the present invention. Apparently, the described embodiments are merely a part of but not all of the embodiments of the present invention. Based on the embodiments of the present invention, all other embodiments obtained by the ordinary skilled in the art without creative labor fall within the scope of the present invention.

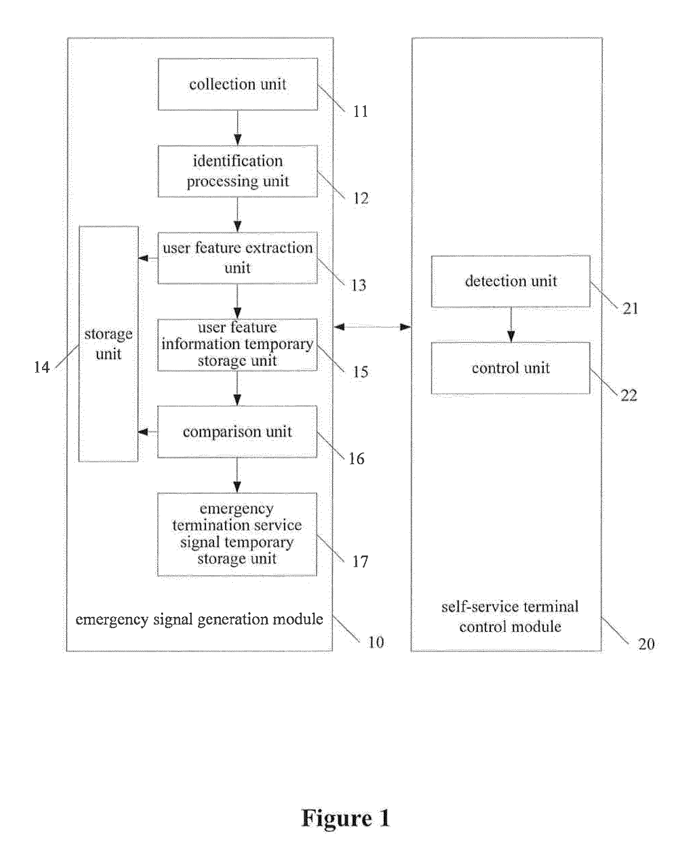

Reference to Figure 1, it is a schematic structural diagram of an automatic emergency risk avoiding system for self-service transaction according to the present invention. An automatic emergency risk avoiding system for self-service transaction of the embodiment automatically identifies unsafe outside factors during a transaction process of a current user at a self-service terminal, and automatically performs emergency risk avoiding to terminate the current transaction when detecting that an operator in the safety area of the self-service terminal changes, and thus security of user's capital can be ensured. The control system specifically comprises an emergency signal generation module 10 and a self-service terminal control module 20.

The emergency signal generation module 10 is configured for: during a transaction process, collecting and identifying current environment information in the safety area of the self-service terminal, extracting user feature information from the collected current environment information, comparing the extracted user feature information with stored user comparison information, and issuing an emergency termination service signal in the case that the extracted user feature information is not consistent with the stored user comparison information; wherein the user comparison information is user feature information collected and stored when a user inputs a correct password for transaction.

The self-service terminal control module 20 is configured for detecting and receiving the emergency termination service signal and controlling the self-service terminal to terminate the transaction in response to the emergency termination service signal.

The emergency signal generation module 10 specifically comprises: a collection unit 11, an identification processing unit 12, a user feature extraction unit 13, a storage unit 14, a user feature information temporary storage unit 15, a comparison unit 16, and an emergency termination service signal temporary storage unit 17.

The collection unit 11 is configured for collecting a frame of an image of the current environment information in the safety area of the self-service terminal from recording video periodically (for example, per 200 ms) and when detecting that the user inputs a correct password for transaction.

The identification processing unit 12 is configured for firstly pre-processing the image of the current environment information collected by the collection unit 11, then performing identification processing by using a face detection technique to identify whether there is only one face image in the image of the current safety area of the self-service terminal, determining that there is an unsafe factor in the current safety area of the self-service terminal and issuing the emergency termination service signal in the case that there are more than one face image in the image of the current safety area of the self-service terminal, or, sending the image on which the identification processing has performed to a user feature extraction unit for extracting user feature information and rescinding a previously issued emergency termination service signal in the case that there is only one face.

The user feature extraction unit 13 is configured for extracting the user feature information in the collected image of the current environment information in the safety area of the self-service terminal. The user feature extraction unit 13 sends the user feature information collected and extracted when detecting that the user inputs a correct password for transaction to a storage unit 14 for storage and sends the user feature information collected and extracted at any other time to a user feature information temporary storage unit 15 for temporary storage.

The storage unit 14 is configured for storing the user feature information collected and extracted when detecting that the user inputs the correct password for transaction as the user comparison information.
The user feature information temporary storage unit 15 is configured for temporarily storing the image of the user feature information extracted by the user feature extraction unit;.

The comparison unit 16 is configured for comparing the user feature information extracted by the user feature extraction unit with the user comparison information in the storage unit, issuing the emergency termination service signal in the case that the user feature information extracted by the user feature extraction unit is not consistent with the user comparison information in the storage unit; otherwise, rescinding the previously issued emergency termination service signal.

The comparison unit 16 compares the three images of the user feature information with the user comparison information in parallel in the case that the number of the images of the user feature information in the user feature information, temporary storage unit 16 is three, and issues the emergency termination service signal only in the case that all of the three images of the user feature information are not consistent with the user comparison information.

In the comparison, the detected face images are compared with a standard face image (the user comparison information) in the storage unit 14 as a reference, to identify whether they are a same person's face. The face comparison adopts a face recognition technique. Preferably, the current recognition rate of the face recognition and comparison is 90%-95%. In order to improve the reliability of recognition, a redundancy solution is adopted for a software structure of the face recognition and comparison. A flow of the redundancy solution is described as follows.

1. A video image is collected per a certain time. The definition of all the collected images is determined, and one recognition is performed per three clear images.

2. Image recognition on the three images is performed in parallel, and an "OR" voter is adopted to vote the three output recognition results, to determine a final output recognition result, i.e., one face recognition is succeeded in the case that only one image of the three images is successfully recognized.

The face recognition adopts neural network technique, and can not reach a recognition of 100%. A mis-recognition rate of a face may be decreased and the stability of a business system may be improved by detecting several images once and voting the detected results by "OR" voter. Generally, assuming the mis-recognition rate of face is 5%, and the mis-recognition rate of one recognition is 5% × 5% × 5%=0.000125 in the case that an "OR" voter is adopted for voting the three recognition results in parallel. Hence, the possibility of one recognition failure is merely about one ten-thousandth, and thus noise and interference caused by the limitation of the recognition technique is decreased and concussion of the business system is decreased.

The emergency termination service signal temporary storage unit 17 is configured for temporarily storing the emergency termination service signal issued by the identification processing unit or the comparison unit.

In order not to affect the proceeding of the whole business service in view of characteristic of business process flow of the self-service terminal, the detection of the emergency termination signal is performed at an appropriate time. The appropriate time at which the self-service terminal control module 20 performs the detection of an emergency termination signal is a time at which the processing module has finished processing of an atomic service and the service point can be temporarily halted, without affecting the proceeding of the whole business service. Therefore, the generated emergency termination service signal must be temporarily stored in the emergency termination service signal temporary storage unit 17 for detection.

Specifically, the self-service terminal control module 20 comprises a detection unit 21 and a control unit 22.

The detection unit 21 is configured for detecting the emergency termination service signal in the emergency termination service signal temporary storage unit based on a set safety query point

The control unit 22 is configured for controlling the self-service terminal to terminate the current transaction when the detection unit detects the presence of the emergency termination service signal.

Preferably, upon detection of the emergency termination service signal, the detection unit 21 enters into a wait state and instructs the control unit 22 to control the self-service terminal to halt the current transaction, the detection unit 21 detects the emergency termination service signal in the emergency termination service signal temporary storage unit 17 periodically within a time limit of the wait state, and notifies the control unit to control the self-service terminal to continue the current transaction only in the case that it is detected that the emergency termination service signal is rescinded; or, the control unit 22 controls the self-service terminal to terminate the current transaction when the time limit expires.

The set safety query point is a service point when the self-service terminal has finished processing of an atomic service. In a specific practice, such as during a money withdrawal business, the safety query point may be set to a point after collecting of information of the money withdrawal business has been finished and before an 8583 message packaged with the information of the money withdrawal business is prepared to be submitted to a background information center, and after the business program proceeds to a step that cashes have already been deployed and come out from a cashbox and before the cashes is prepared to be sent to a cash outlet. However, during a transfer business, the safety query point may be set to a point after collecting of transfer information of the transfer business has been finished and before an 8583 message packaged with the transfer information is prepared to be submitted to a background information center.

According to the present invention, for the first query point of the money withdrawal business and the query point of the transfer business, the automatic emergency risk avoiding flow of the processing module is designed to directly cancel the current business, provide a corresponding user prompt, print a slip and proceed to the start of the next business flow, i.e., a business type selection interface for waiting a user to select a business type. Alternatively, it may be designed to directly cancel the current business, provide a corresponding user prompt, print a slip and quit the card.

According to the present invention, for the second safety query point of the money withdrawal business, the automatic emergency risk avoiding flow of the processing module is designed to return the cashes on the cash holder to the cashbox, and the processing module initiates a reversal flow, gives a corresponding user prompt after the reversal is finished, prints a slip and proceeds to the start of the next business flow, i.e., a business type selection interface for waiting a user to select a business type. Alternatively, it may be designed to directly cancel the current business, provide a corresponding user prompt, print a slip and quit the card.

In a specific practice, the automatic emergency risk avoiding system for self-service transaction according to embodiments of the present invention may be applied to self-service terminals such as Automatic Teller Machine (ATM). During a current transaction process of a user of the self-service terminal, the self-service terminal automatically identifies unsafe factors outside, and automatically performs emergency risk avoiding to terminate the current transaction if detecting that an operator in the safety area of the self-service terminal changes, and thus the security of user's capital is ensured. For example, during a transaction process, the emergency signal generation module is adopted to collect and identify the current environment information in the safety area of the self-service terminal, extract user feature information in the collected current environment information, compare the extracted user feature information in the collected current environment information with stored user comparison information, and issue an emergency termination service signal in the case that the extracted user feature information in the collected current environment information is not consistent with the stored user comparison information, wherein the user comparison information is user feature information collected and stored when the user inputs a correct password for transaction, and a self-service terminal control module is adopted to detect and receive the emergency termination service signal, and control the self-service terminal to terminate the transaction in response to the emergency termination service signal. Therefore, during a business transaction process of a financial self-service terminal (especially during money withdrawal and transfer transactions), process flow facilitating the security of the cardholder's account fund is automatically taken without manual intervention according to the change of outside environment such as when an operator of the financial self-service device in the safety area is hijacked and thus the operation authority is transferred, or unsafe factors such as others appear in the safety area, therefore, the security of the account fund during the user business operation process is improved technically, and the crime success rate and crime earning ratio of criminals are decreased.

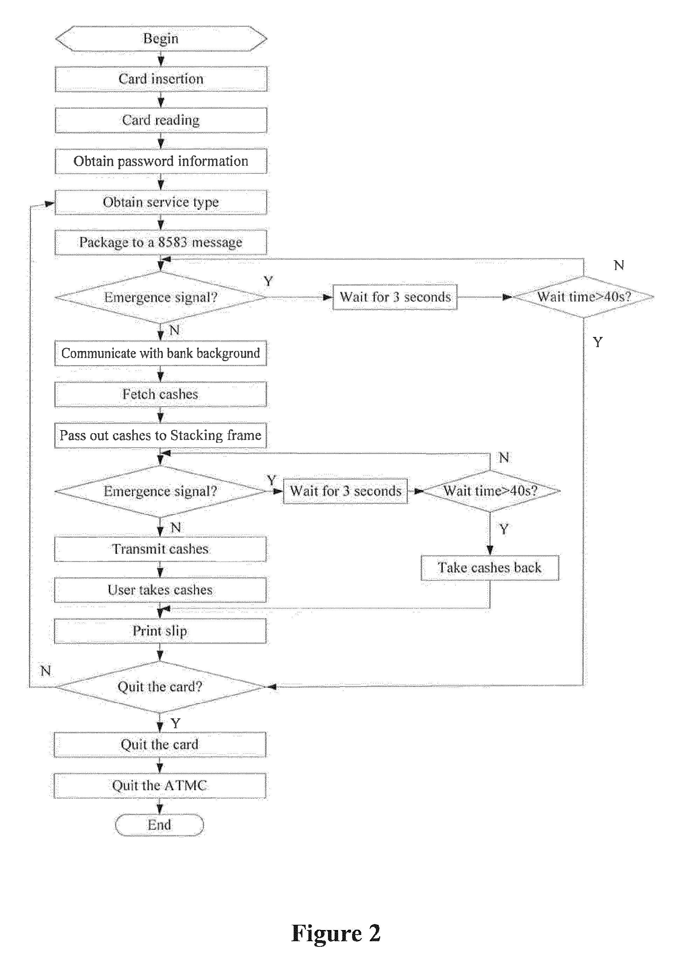

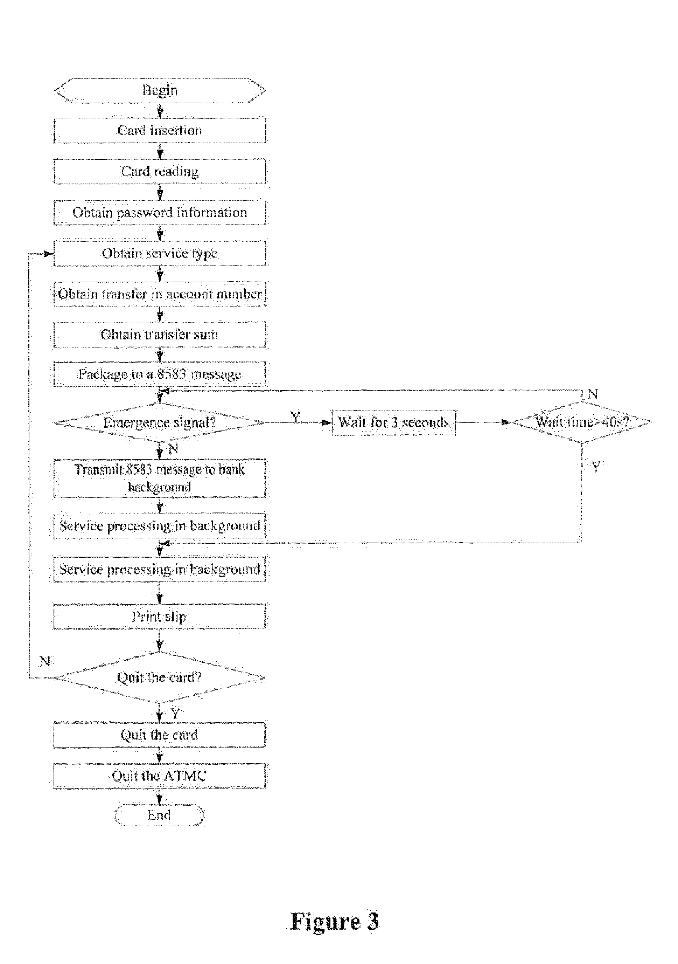

Hereinafter, processes in the case that the automatic emergency risk avoiding system for self-service transaction according to the present invention is applied to a self-service terminal control system in the prior art are specifically described in conjunction with Figures 2 and 3.

Firstly, referring to Figure 2, it is a schematic flow chart for performing money withdrawal business process in the case that the automatic emergency risk avoiding system for self-service transaction according to the present invention is applied to a self-service terminal control system in the prior art. The specific steps are described as follows.
(1) If a user enters a safety area of a financial self-service device and prepares to perform a business operation, a video monitor of the financial self-service device records video of the cardholder, and a business processing system interface of the financial self-service device prompts: please ensure that only oneself is in the safety area.
(2) The collection unit 11 collects a frame of an image of the current environment information in the safety area of the self-service terminal from the recording video periodically (for example, per 200 ms).
(3) The identification processing unit 12 firstly pre-processes the image of the current environment information collected by the collection unit 11, and then performs identification processing by using a face detection technique, to identify whether there is only one face image in the image of the current safety area of the self-service terminal, determines that there is an unsafe factor in the current safety area of the self-service terminal and issues an emergency termination service signal to the emergency termination service signal temporary storage unit 17 in the case that there are more than one face image in the image of the current safety area of the self-service terminal, or, in the case that there is only one person, the business processing system of the financial self-service terminal provides service, starts card insertion and card reading, and enters into a password input interface, and further, in the case that the identification processing unit 12 has previously issued an emergency termination service signal to the emergency termination service signal temporary storage unit 17 and there is only one person identified in the current identification processing, performs a reset operation, and deletes the previously issued emergency termination service signal.
(4) When the user enters a correct password, the collection unit 11 collects a frame of an image of the current environment information in the safety area of the self-service terminal from recording video when the user enters a correct password for transaction, performs definition acceptance check and face recognition processing on the collected image, and collects user feature information extracted by the user feature extraction unit 13 and sends the collected user feature information to the storage unit 14 for storing as user comparison information (a standard face image of the user) in the case that there is one and only one face.

During the next business process of the user, the collection unit 11 continually collects face images of the operator in the safety area, compares the collected face images with the standard face image in the storage unit 14, generates an emergency termination signal and stores the emergency termination signal in the emergency termination service signal temporary storage unit 17 for the self-service terminal control module 20 to query and call in the case that one of the collected face images indicates a different person or there is more than one face; otherwise, resets the emergency state signal in the emergency termination service signal temporary storage unit 17 for the self-service terminal control module 20 to query and call. Resetting of the emergency signal implies that the previous emergency state has been rescinded.
(5) In the case that the user enters a business type, the business processing system of the financial self-service terminal packages the obtained bank card information, password information and business information into an 8583 message. At this time, the detection unit 21 of the self-service terminal control module 20 performs an emergency signal query by reading the emergency signal in the emergency termination service signal temporary storage unit 17.
(6) In the case that the detection unit 21 detects that the emergency signal is true (present), i.e., there is an emergency state in the safety area, the detection unit 21 instructs the control unit 22 to control the self-service terminal to halt the current transaction, halt the transmission of the 8583 message to the bank background business processing system, and enters into a wait state, and the detection unit 21 performs an emergency signal query per 3 seconds, until a timing of 40s is reached. If detecting that the emergency state is rescinded within 40s, the financial self-service terminal continues the processing of the current business, the detection unit 21 sends the 8583 message to the bank background, and continues the remainder process; otherwise, the control unit 22 controls the self-service terminal to terminate the current transaction and perform an automatic emergency risk avoiding processing. During the automatic emergency risk avoiding, the card may be quitted after giving a corresponding prompt of business operation failure, or the flow may directly enters into a next business selection interface after giving a corresponding prompt of business operation failure.
(7) In the case that the detection unit 21 detects that the emergency signal is false (is not present), the financial self-service terminal continues the processing of the current business, sends the 8583 message to the bank background business processing system, and waits the bank background processing result, continues the existing flow of the current business processing in the case that the background processing fails, or in the case that the background processing successes, an execution module begins to deploy cashes, performs friction on cashes from the cashbox, and sends the cashes out from the cashbox into a temporary storage module, the cashes sequentially pass through a cash identification module and an upper cabinet, and are stacked into a cash temporary storage. After the cashes are stacked and before the cashes are sent to the cash outlet, the detection unit 21 of the self-service terminal control module 20 performs an emergency signal query, and reads the emergency signal in the emergency termination service signal temporary unit 17.
(8) At this time, in the case that the detection unit 21 detects that the emergency signal is false (not present), the financial self-service terminal continues the processing of the current business, sends cashes on the cash temporary storage to the cash outlet, waits the user to fetch the cashes, and continues the remainder existing flow. In the case that the detection unit 21 detects that the emergency signal is true (present), i.e., there is an emergency state in the safety area, the detection unit 21 instructs the control unit 22 to control the self-service terminal to halt the current transaction, to stop sending the cashes out, with the cashes still on the cash temporary storage, and enters into a wait state, the detection unit 21 queries the emergency signal per 3 seconds, until a timing of 40s is reached, during this time, the cashes is still on the cash temporary storage. In the case that it is detected that the emergency state is rescinded within 40s, the financial self-service terminal continues the reminder flow of the current business, and the cashes will be passed from the cash temporary storage to the cash outlet for being fetched by the user; otherwise, the control unit 22 controls the self-service terminal to terminate the current business, performs an automatic emergency risk avoiding processing, gives security prompt information, and take the cashes back. The cashes are passed from the cash temporary storage, sequentially through an upper cabinet and a cash identification module, to a callback box, and then the execution module finishes the cash callback process. A reversal is initiated, and a reversal result is displayed. Finally, the flow enters into a transaction selection interface, or, the card is quited and a slip is printed, which indicates the ending of business.

Figure 3 is a schematic flow chart for performing money withdrawal business in the case that the automatic emergency risk avoiding system for self-service transaction according to the present invention is applied to a self-service terminal control system in the prior art. The specific steps are described as follows.
(1) In the case that a user enters a safety area of a financial self-service device and prepares to perform a business operation, a video monitor of the financial self-service device records video of the cardholder, and a business processing system interface of the financial self-service device prompts: please ensure that only oneself is in the safety area.
(2) The collection unit 11 collects a frame of an image of current environment information in the safety area of the self-service terminal from the recording video periodically (for example, per 200 ms).
(3) The identification process unit 12 firstly pre-processes the image of the current environment information collected by the collection unit 11, and then performs identification process using face detection technique, to identify whether there is only one face image in the image of the current safety area of the self-service terminal. It indicates that there is an unsafe factor in the current safety area of the self-service terminal in the case that there are more than one face image, the identification process unit 12 issues an emergency termination service signal to the emergency termination service signal temporary storage unit 17. In the case that there is only one person, the business processing system of the financial self-service terminal provides service, starts card insertion and card reading, and enters into a password input interface. Further, in the case that the identification processing unit 12 has previously issued an emergency termination service signal to the emergency termination service signal temporary storage unit 17 and there is only one person in the current identification process, the identification processing unit 12 performs a reset operation, and deletes the previously issued emergency termination service signal.
(4) When the user enters a correct password, the collection unit 11 collects a frame of an image of the current environment information in the safety area of the self-service terminal from recording video when the user enters a correct password for transaction. definition acceptance check and face recognition processing are performed on the collected image. In the case that there is one and only one face, the collection unit 11 collects user feature information extracted by the user feature extraction unit 13 and sends the user feature information to the storage unit 14 for storing as user comparison information (a standard face image of the user).

During the next business process of the user, the collection unit 11 continually collects face images of the operator in the safety area, compares the collected face images with the standard face image in the storage unit 14. In the case that it is a different person or there is more than one face, an emergency termination signal is generated and stored in the emergency termination service signal temporary storage unit 17 for the self-service terminal control module 20 to query and call; otherwise, the the emergency state signal in the emergency termination service signal temporary storage unit 17 is reset for the self-service terminal control module 20 to query and call. Resetting of the emergency signal implies that the previous emergency state has been rescinded.
(5) when the user enters a business type, a business process system of the financial self-service terminal packages the obtained bank card information, password information, business information and all account transferring information into 8583 message. At this time, the detection unit 21 of the self-service terminal control module 20 performs emergency signal query, reads the emergency signal in the emergency termination service signal temporary storage unit 17.
(6) In the case that the detection unit 21 detects that the emergency signal is false (not present), the financial self-service terminal continues the processing of the current business, sends the 8583 message to the bank background business processing system, and waits the bank background processing result.
(7) In the case that the detection unit 21 detects that the emergency signal is true (present), i.e., there is an emergency state in the safety area, the detection unit 21 instructs the control unit 22 to control the self-service terminal to halt the current transaction, halt the transmission of the 8583 message to the bank background business processing system, and enter into a wait state. The detection unit 21 queries the emergency signal per 3 seconds, until a timing of 40s is reached. In the case that detecting that the emergency state is rescinded within 40s, the financial self-service terminal continues the processing of the current business, the detection unit 21 sends the 8583 message to the bank background, and continues the remainder process; otherwise, the control unit 22 controls the self-service terminal to terminate the current transaction, performs an automatic emergency risk avoiding processing, prints a slip and enters into a transaction selection interface, or, prints a slip and quits the card. The business is finished.

Those skilled in the art can understand that the whole flow or part flow implementing the above methods of embodiments may be implemented by correlated hardware instructed by computer programs, the programs may be stored in a computer readable storage medium, and the programs when executed may comprise the above flows of the embodiments of various methods. Wherein, the storage medium may be a magnetic disk, an optical disk, a Read-Only Memory (ROM), or a Random Access Memory (RAM), etc.

The above described is preferable embodiments of the present invention, it should be point out that for those ordinary skilled in the art, there may be some improvements and retouches without departing from the principle of the present invention, and these improvements and retouches may be regarded as within the scope of the present invention.

## Claims

1. An automatic emergency risk avoiding system for a self-service transaction, comprising:
an emergency signal generation module configured for: during a transaction process, collecting and identifying current environment information in a safety area of a self-service terminal, extracting user feature information in the collected current environment information, comparing the extracted user feature information in the collected current environment information with stored user comparison information, and issuing an emergency termination service signal in the case that the extracted user feature information in the collected current environment information is not consistent with the stored user comparison information, wherein the user comparison information is user feature information collected and stored when a user inputs a correct password for transaction; and
a self-service terminal control module for detecting and receiving the emergency termination service signal and controlling the self-service terminal to terminate the transaction in response to the emergency termination service signal.

2. The automatic emergency risk avoiding system for the self-service transaction according to claim 1, wherein the emergency signal generation module comprises:
a collection unit for collecting a frame of an image of the current environment information in the safety area of the self-service terminal from recording video periodically and when detecting the user inputs a correct password for transaction;
a user feature extraction unit for extracting the user feature information in the collected image of the current environment information in the safety area of the self-service terminal;
a storage unit for storing the user feature information collected and extracted when detecting the user inputs the correct password for transaction as the user comparison information; and
a comparison unit for comparing the user feature information extracted by the user feature extraction unit with the user comparison information in the storage unit, issuing the emergency termination service signal in the case that the user feature information extracted by the user feature extraction unit is not consistent with the user comparison information in the storage unit; otherwise, rescinding a previously issued emergency termination service signal.

3. The automatic emergency risk avoiding system for the self-service transaction according to claim 2, wherein the emergency signal generation module further comprises:
an identification processing unit for performing identification processing on the image of the current environment information collected by the collection unit, to identify whether there is only one person in the current safety area of the self-service terminal, issuing the emergency termination service signal in the case that there is more than one person, or in the case that there is only one person, sending the image on which the identification processing has been performed to the user feature extraction unit for user feature information extraction, and rescinding the previously issued emergency termination service signal.

4. The automatic emergency risk avoiding system for the self-service transaction according to claim 3, wherein the emergency signal generation module further comprises:
a user feature information temporary storage unit for temporarily storing the image of the user feature information extracted by the user feature extraction unit;
wherein in the case that the number of the images of the user feature information in the user feature information temporary storage unit is three, the comparison unit compares the three images of the user feature information with the user comparison information in parallel and issues the emergency termination service signal only in the case that all of the three images of the user feature information are not consistent with the user comparison information.

5. The automatic emergency risk avoiding system for the self-service transaction according to any one of claims 3-4, wherein the emergency signal generation module further comprises:
an emergency termination service signal temporary storage unit for temporarily storing the emergency termination service signal issued by the identification processing unit or the comparison unit.

6. The automatic emergency risk avoiding system for self-service transaction according to claim 5, wherein the self-service terminal control module comprises:
a detection unit for detecting the emergency termination service signal in the emergency termination service signal temporary storage unit based on a set safety query point; and
a control unit for controlling the self-service terminal to terminate the current transaction in the case that the detection unit detects that the emergency termination service signal is present.

7. The automatic emergency risk avoiding system for self-service transaction according to claim 6, wherein in the case that the detection unit detects the emergency termination service signal, the detection unit enters into a wait state, instructs the control unit to control the self-service terminal to halt the current transaction, detects the emergency termination service signal in the emergency termination service signal temporary storage unit periodically within a time limit of the wait state, and notifies the control unit to control the self-service terminal to continue the current transaction only in the case that the detection unit detects that the emergency termination service signal is rescinded, or, the control unit controls the self-service terminal to terminate the current transaction in the case that the time limit expires.

8. The automatic emergency risk avoiding system for self-service transaction according to any one of claims 6-7, wherein the safety query point is a service point in the case that the self-service terminal has finished processing of an atomic service.

9. The automatic emergency risk avoiding system for self-service transaction according to claim 8, wherein the safety query point comprises a point after collecting of information of money withdrawal business has been finished and before an 8583 message packaged with the information of the money withdrawal business is prepared to be submitted to a background information center, and a point after a business program proceeds to a step that cashes have already been deployed and come out from a cashbox and before the cashes is prepared to be sent to a cash outlet.

10. The automatic emergency risk avoiding system for self-service transaction according to claim 8, wherein the safety query point comprises a point after collecting of transfer information of a transfer business has been finished and before an 8583 message packaged with the transfer information, is prepared to be submitted to a background information center.
